(19) Europäisches Patentamt
European Patent Office
Office européen des brevets

(11) **EP 2 477 899 B1**

(12) **EUROPEAN PATENT SPECIFICATION**

(45) Date of publication and mention
of the grant of the patent:
**14.06.2017  Bulletin 2017/24**

(51) Int Cl.:
***B65D 1/02*** *(2006.01)*       ***B29C 49/12*** *(2006.01)*
***B29B 11/14*** *(2006.01)*

(21) Application number: **10805371.1**

(22) Date of filing: **05.08.2010**

(86) International application number:
**PCT/BE2010/000057**

(87) International publication number:
**WO 2011/014935 (10.02.2011 Gazette 2011/06)**

(54) **PLASTIC CONTAINER WITH A RECESS IN ITS BOTTOM AND ITS MANUFACTURING METHOD, RESP. DEVICE AND USE**

KUNSTSTOFFBEHÄLTER MIT EINER VERTIEFUNG IM BODEN UND HERSTELLUNGSVERFAHREN DAFÜR, ZUGEHÖRIGE VORRICHTUNG UND VERWENDUNG

RÉCIPIENT EN PLASTIQUE AVEC FOND À ÉVIDEMENT ET SON PROCÉDÉ DE FABRICATION, DISPOSITIF CORRESPONDANT ET UTILISATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **05.08.2009  BE 200900472**

(43) Date of publication of application:
**25.07.2012  Bulletin 2012/30**

(73) Proprietor: **Resilux**
**9230 Wetteren (BE)**

(72) Inventor: **DIERICKX, William**
**B-9070 Destelbergen (BE)**

(74) Representative: **Petsis, Christos**
**Attorney at Law**
**Kyparissias 4-6**
**54249 Thessaloniki (GR)**

(56) References cited:
**EP-A1- 0 482 972          WO-A1-2008/100136**
**DE-A1- 10 236 830          JP-A- 4 294 735**
**US-A- 4 981 736          US-A1- 2002 063 105**
**US-A1- 2009 159 556**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of the invention

This invention relates to containers, in particular made of plastic comprising a neck, a wall portion attached thereto and a bottom having a determined circumference, each extending along an axis, wherein said bottom part has a recess that generates a hollow space therein.

## Background of the invention

In packaging, there is a growing need to include further identification parameters, in parallel with ever growing marketing requirements and the identification needs that are connected thereto. In this respect, a lot was yet performed for the overall shaping of the containers as a whole. A subsequent trend consisted in further shaping the walls of the container, e.g. by arranging some shaping profiles on the surface thereof. However, such design profiles are generally limited in thickness owing to functional constraints, resulting in wall design profiles that are mainly two dimensional. This in turn results of course in some limitation of the shaping freedom of such identification designs.

To enhance the shaping freedom, a three dimensional shaping availability was sought. Most ordinary containers have generally mainly flat bottoms that may also be slightly bended inwardly so as to provide its vertical stability. The bending curve of such known containers have generally a small height not exceeding 1/8 of the section diameter of the container at its bottom, or even less since the flatter the bottom is, the better, provided that the requested stability of the container is guaranteed. The loss in volume must be kept to a minimum while keeping the requested stability of the container, especially in the case of a substantially elongated bottle.

## Prior art

WO 2006/046223 A1 of Lomjanski yet discloses a container for fluids comprising a bottom provided with a recess that merely relates to a storage space that is cylindrical, thereby not having any isolated or specific top since the top section of said storage space consists of a circular surface. In addition, the space arranged in the bottom part of the container, is exclusively intended for storage purposes for storing cups in the bottom space.

DE19721463A1 discloses a container yet having a recess in the bottom with a substantial height, with the drawback however that the whole bottom area surrounding the recess is a lost space for the container, which affects the overall capacity of the container thereby limiting its available content.

WO2008/100136A1 of R-PROJECTS BV yet discloses a bottle for fluids comprising a bottom provided with a recess with a noticeable height designated as a kick. However, the shape of the shown recess is quite ordinary and is even claimed as rotation symmetrical so that its aim is not for identification purposes. US4981736 discloses another bottle.

## Object of the invention

This invention aims at remedying the drawbacks of the prior art cited above and likewise the shortcomings thereof by providing a solution to the problem of limited variety of available identification means.

## Summary of the invention

This problem is solved by means of a container proposed according to the invention that is provided with an identification means, wherein said identification device proposed with the container according to the invention has a substantially three dimensional shape extending significantly both in length and width and in height as well and in that it is located at the bottom of said container.

There is thus proposed according to the invention an identifying means that has virtually no limitation in variety of shapes, at least on the ground of the three dimensionality thereof. This provides a wider choice among possible identification shapes while keeping at least some content capacity in the bottom section around the space taken by said identification means.

Thanks to this capacity of the identification shape, a good compromise is reached between the aimed visibility of said identification element on the one hand, and the available content space remaining in the bottom area of the container around said identification element, on the other hand.

According to the invention, at least one of said significant tips is provided with delimitating means for delimitating geometrically said tip with respect to its direct environment.

For suitably acting as identification means, the tip or summit is made well noticeable over its direct environment in that it is not arranged in the smooth continuation thereof contrarily to the known bottom shapes, thereby yielding a discontinuous tip, wherein said discontinuity of the tip may be of various natures as will be set out hereafter from various embodiments thereof. Said discontinuity enhances the visibility of the identification element which makes the identification function more efficient.

In this respect, the proposed location of at least one top on the central axis provides the best visibility thereof to the customer from any observation angle, which is optimal from an identification point of view. So this optimum can be achieved thanks to the essentially central position of this identification means in the container.

In this respect, the proposed ratio of height of the identification element to its width and/or length diameter taken at the bottom surface is preferably not lower than 2. These proposed relative dimensions provide a good visual impact to the customer. It is to be understood that the small height currently used for existing bottom shapes that are solely intended for stability purposes of the container in their standing position, is not sufficient for providing a suitable identification function.

According to a further advantageous embodiment of the invention, said recess or kick has a polygonal basis, preferably with equal sides, typically with a substantially pyramidal profile, typically with a triangular basis. This outstanding compact shape offers the advantage to be fairly distinctive for the identification purpose with a perfectly noticeable top in the shape of a sharp angle thus providing an excellent rate of identification efficiency versus space occupation in the bottom of the container thereby not affecting accessibly the content capacity of the container in its bottom region. Thanks to the proposed tetrahedral shape of said identification element, the progressively reducing shape from the polygonal basis to a single type/tip on top with a pyramidal type profile, a useful saving of content loss in the identified container can be achieved compared to known kicks having a shape closer to the cylindrical type ones with substantially upright walls and/or no top. The identifying kick has a surface that is at least partially rough, thereby consisting of asperities. A particular embodiment thereof may consist of longitudinal grooves, possibly extending along a non linear line which may build the sharp top edge thereof. Thanks to this remarkable embodiment, a fairly realistic shape with a featuring relief can be allocated to the identifier, e.g. consisting in the imitation of an idealized mountain or a chain of mountains with a complex structure form.

According to a still further advantageous embodiment of the invention, said recess or kick has irregularly extending grooves thus generating a wide variety of facets, thereby allowing a virtually infinite number of possible identifiers by the huge amount of possible combinations.

Said shape may thus consist of a well known mountain that may be located in the same region as the origin of the product to be contained in the container. This is applicable for instance for mountains having a characteristic shape such as the well known Matterhorn or Mont Blanc, thereby allowing an association between the products originating from the suggested mountain and surrounding area by an average consumer. However, such an association is not requested as such in that any shape can be chosen in a virtually arbitrary way to be associated to a certain product: other associating criteria may be considered such as associating properties like purity resulting in an association of ideas between "the pure mountain" and the "pure water" packaged in the thus identified container. In other words, this means a remarkable customization means, a great advantage whereof can be drawn in the marketing. The body portion of the container is translucent, or even transparent, at least in part, thereby allowing visibility of said identification means arranged in the bottom of the container, seen from the side of the container in its upper right position. This lateral transparency of the container allows the kick not to be considered only as an identifier, but also as an ornamental device or item that may be advantageously exploited for marketing purposes as well, especially when selecting the special particular decorative shapes proposed above according to the invention. The bottom region is colored or dyed, at least in part. In particular, only the kick or recessing part is colored, whereas the remaining part of the bottom of the container is not, which sets for the identifying and decorating kick, thereby providing a very original aspect to the container according to the invention. Mineral water is commonly packed in transparent bottles e.g. in plastic material, wherein the material of the bottles is colourless or evenly colored. Such bottles satisfy for normal domestic use or in catering establishments, even though a drawback is that the customer to whom water is presented in this way feels this water only as common or kind of dead. The water merely has the function of thirst-quencher, thereby not offering any further added value or sensation. However, particularly for use in the so-called out of home market, there is a need for bottles that give an added value to the water, so that the presentation of water in a bottle like that for the user involves a special perception.

To meet this further need, the latter appealing embodiment of the invention provides a bottle which is constructed such that an observer gets the visual impression that water in that bottle has a colour indeed. The water, such as mineral water, either being a fizzy soft drink or not, is colourless in itself, so that on pouring out it appears that the water has no colour, but as long as the water is in the bottle it has a colour impression. In itself, this is yet a surprising effect, which draws the attention and has an elegant, esthetical effect. Furthermore, when bottles are provided for mutually different colour impressions, customers are offered the opportunity to select a water that matches, colour-wise, a certain occasion or mood, personal character, certain clothes, etc. Coloured bottles yet exist as such, for example green or blue bottles. With bottles like these however, one doesn't get the impression that the liquid in the bottle has the green colour, but instead one simply gets the impression of a green, resp. blue bottle containing a liquid, nothing more. A quite attractive polychromatic effect is generated by combining a colored kick as above and with the remaining bottom around the basis of the kick with a different color. Additionally, a still further color can be given to the body section of the container starting from its bottom, possibly with a progressive transition from the bottom to a lighter dye from a certain height of the body section. This may result in particularly decorative color games, thanks to the invention there is thus proposed a container having particular color effects, notably special defending or gathering effects of one or a plurality of colors in the container, wherein the location of the dye has no functional limitations on the one hand and is free of sheaths or any other structural heterogeneities on the other hand.

A complementary embodiment of the invention is particularly suitable in case the container is intended as a bottle for freshly drinks, so as to ensure the stiffness and to provide the requested strength against the pressure accumulated in the container. This is even more recommended in the invention wherein a shape transformation is performed resulting in that the bottom section has a more complex shape, which may require reinforcement thereof.

According to an additional embodiment of the invention, said reinforcement may also consist of a slight over thickness of the bottom of the preform, in order to increase the available material, thereby to allow the achievement of the bottom without any tear that could occur when making the intended shape, of the kick.

According to a particularly suitable embodiment of the invention, the container is mainly composed of a primary plastic material consisting in PET based upon the outstanding formability thereof.

This invention further also relates to a particularly attractive application thereof consisting of the remarkable use of a container as defined above in that it is put in artificial light, in particular UV radiation. Thanks to this particular location of the kick, a remarkable color effect is achieved.

Said remarkable effect is even more noticeable for a kick that is provided with an extended passed system, more particularly when having a great variety of directions. Every differently directly facet than acts as an additional secondary light source which considerably reinforces or enhances the dispersing effect. A particularly striking and attractive container is thus achieved according to the invention, which makes it an outstanding marketing means.

An additional double anti drip feature is particularly applicable for high quality or luxury oils in a packaging bottle that is provided with a suitable decorative element at its bottom, such as a featured olive or even olive grasp, by virtue of said association idea depicted above.

In the food industry, more and more plastic containers are used to contain beverages. The manufacturing method of such containers consists in firstly making performs by injection molding, and subsequently by blow molding the achieved performs as semi manufactured products in a dye or mold to containers.

In the stretch operation that precedes the blow operation, a stretch rod is introduced in the blowing opening of the preform up to the bottom thereof, thereby pressing against it and thus stretching the preform until it reaches the bottom of the dye or mold. Such a method is disclosed in CA2593927A1, which describes the manufacturing of asymmetric containers.

A stretch and blow operations for such containers, resp. preform or parison according to the invention present a difficulty. At the end of the stretch operation, the stretch rod must reach the neighborhood of the top of the kick and it then needs to remain firmly or narrowly centered on the top during the whole blow operation in order to ensure a good distribution of the material on the whole surface of the bottom. However, said stretch rod is fairly long and thin. In case it is maintained and guided by its opposite end only indeed, the centering thereof on the top of the kick, the bottom shape in the dye or mold cannot be guaranteed. This invention however brings a solution to this problem.

Indeed, this invention also relates to a method as defined in the appended method claims.

Thanks to this ingenuous identification means that is directly incorporated in the structure of the bottle itself, any other identification means can be disregarded, and even without having to appeal on a so-called over molding technique since the shape may be achieved directly by the injection molding process in this case indeed, i.e. without additional injection step to achieve the special shape intended for.

In some applications of this invention, the material that is comprised between the end of the stretching rod and the top of the shape of the bottom section of the dye or mold is not evacuated satisfactorily during the blowing operation. In order to remedy to this, the down movement of the stretch rod is, interrupted at a short distance of the top of the shape of the bottom section of the dye according to a very advantageous embodiment of the invention. More particularly, some tenths millimeters are meant here so as to allow a free evacuation of the material, and simultaneously maintaining the guidance of the end of the stretch rot. In this way, the material that is comprised between the end of the stretch rod and said top of the shape of the bottom section of the dye is not blocked in any way and may flow off perfectly. In addition, the perfect positioning of the end of the stretch rod with respect to the top of the shape of the bottom section of the dye is not lost and is still maintained, thanks to the concave shape of the end of the stretch rod that is specifically provided.

Finally, this invention also relates to a device for manufacturing a preform or container as defined in the appended device claims. This blow device offers the advantage to be polyvalent, in that it allows the manufacturing of containers both according to known methods, and with a method according to the invention thanks to the mold, the bottom section whereof is provided with a noticeable shape. Said device is able to work indeed with different molds.

**Brief description of the drawings**

Figs. 1 & 2 are each a side view of a first, resp. second embodiment of the container according to the invention.

Fig. 3 is a perspective view of an enlarged detail of the embodiment of the container shown in Fig. 1.

Fig. 4 & 5 show a further enlarged lateral view of the detail of the embodiment shown in Fig. 1, representing in detail an enlarged view of a part of the said embodiment of the container according to the invention, resp. seen under a different angle.

Fig. 6 is a bottom view of said detail represented in the previous Fig.

Fig. 7 shows a vertical cross section of said detail according to the axis of the container from a certain angle.

Figs. 8 and 9 are each a side view of a third, resp. fourth embodiment of the container according to the invention.

Figs. 10 to 12 show the diagrammatic representations of a cross section substantially through a central plane of said first, resp. second embodiment of a perform to be transformed into said container according to the invention shown in both previous figs.

Fig. 13 is a mixed lateral view of a combined embodiment of a double anti drip feature.

Fig. 14 represents a similar side view of said second embodiment shown in Fig. 9, yet according to a fifth embodiment of the container.

Fig. 15 is a diagrammatic representation of a particular use of the fourth embodiment of the container shown in Fig. 9.

Fig. 16 is a mixed diagrammatic representation of a preform or parison and resp. container processed there from, with mutually cooperating parts shown in vertical cross sections.

Fig. 17 and following are further process directed figures wherein the first one represents a diagrammatic side view of a further embodiment of the container.

Figs. 18 and 19 are each a diagrammatic representation of the main step in said transformation process in a side view & resp. that is slightly pivoted.

Fig. 20 is a similar view as Fig. 18, yet in vertical cross section.

Fig. 21 is a detailed representation in enlarged view according to Fig. 19 of the latter step of the transformation process directed on both mutually cooperating parts thereof.

Fig. 22 is a global perspective view of a device for performing the manufacturing method of said container according to the invention.

## Description

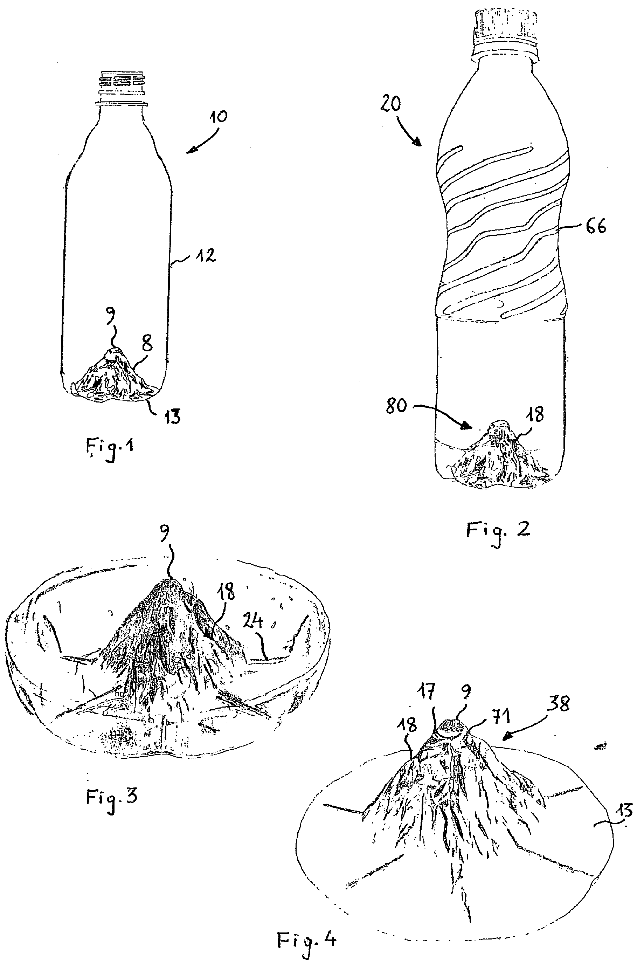

The present invention generally relates to plastic containers notably for essentially transparent or translucent beverages, which are provided with an identifying device consisting of a specially designed bottom, as described below, notably with reference to Fig. 1, which shows a bottle having a featured bottom.

In the appended drawings, the container is represented by a bottle 10 having a substantially straight wall 12 and a circular cross section. However, the present invention also applies to bottles having different cross sections, but also to other types of containers, such as for example perfume bottles or phials, pots, pitchers and other packaging materials or utilitarian objects, such as jerrycans or water bottles, illuminated signs and the like.

As is illustrated in Fig. 1, the bottom 13 of the bottle 10 is provided with a recess 8 which extends fairly towards the interior of the bottle. In this case, it is a distinct relief 8 which produces a corresponding cavity 38 in the interior volume of the bottle 10 on the outside of the bottom 13. In view of the distinct character of the associated volume which is enclosed by said relief 8, the effective internal volume of the bottle 10 is slightly reduced compared to conventional standard bottles.

Said recess 8 has a distinct tip 9, which protrudes above its immediate surroundings 17 and which is thereby clearly delimitated with respect thereto by means of suitable delimitating means 71 and which is thereby clearly delimitated with respect thereto by means of suitable delimitating means 71, e.g. a vertical edge portion extending from said tip 9 to the body part of said recess 8. Said tip 9 is situated essentially on the axis of rotation $\ell$ and its height 8 is greater than the smallest distance value $\delta$ from the axis $\ell$ to the circumference 23 of the bottom. Said height is measured from the orthogonal projection of said tip 9 on the axis $\ell$ to that on the circumference of the bottom 23 thereon. The ratio of the height to the smallest distance value of the circumference 29 of the bottom of the recess 8 to the axis $\ell$ is, for example, at least 2. Besides, said height of the identifying means is not lower than 1 cm. These proposed relative, resp. absolute dimensions provide a quite satisfactory visual impact to the customer.

Fig. 2 shows a somehow more sophisticated embodiment of the bottle that is provided with peripheral grooves 66 in the wall. Notwithstanding that the profile thereof has a sort of fantasy appearance, it is obvious that the variety of shapes that is achievable thanks to the the recess arranged in the bottom location is much wider than the one achievable on the wall. This is firstly owing to the fact that at the bottom, a fully three dimensional distinct shape may be incorporated, whereas on the wall no such three dimensional shape is affordable.

Fig. 3 shows an enlarged view of the bottom section 13 of the bottle in which the recessed distance of the cavity 8 approaches the radius of the bottom. This makes said recess 8 within the unit 10 eye-catching, as is clear from Fig 1. In this case, the ratio of the height to the smallest transverse dimension of the circumference 29 of the base of the recess can be approximately 1 and even greater. This results in that the height of the recess approaches the sectional diameter of the base thereof 8 and even exceeds it, which makes the recess even more eye-catching. Said recess 8 has a shape that is compact, in particular wherein the ratio of its maximum elongation axis to the maximum elongation in a medium central plane $\alpha$ extending perpendicularly on said axis $\ell > 1$. These larger height dimensions increase the freedom of shape in bottle bottoms, which results in an increase in the flexibility of conceivable bottle bottoms and generates attractive product ranges. This makes such bottles particularly suitable for identification purposes.

Said flexibility in possible identification designs is set out below. On top of the recess 8, a distinct tip 9 is provided which protrudes with respect to its immediate surroundings 17. It may be advantageously bounded by delimitating means 71, possibly extending in a discontinuous manner with respect to the tip 9, which makes it even more visible or obvious. In the representation of Fig. 4, said discontinuity is made visible by a bending area 72 consisting in a bending line located between said tip 9 and the remaining part of the body or wall of the recess that is adjacent thereto.

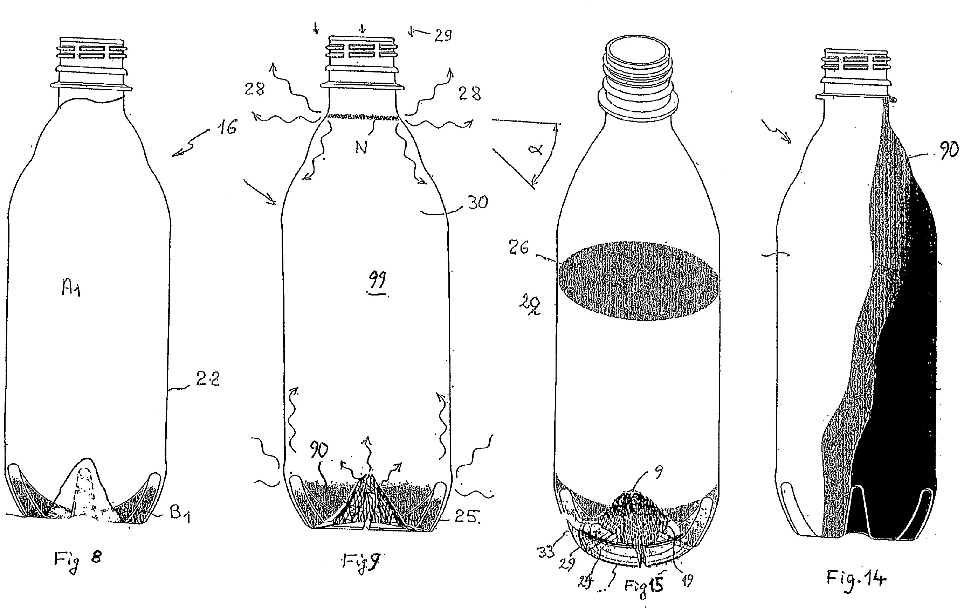

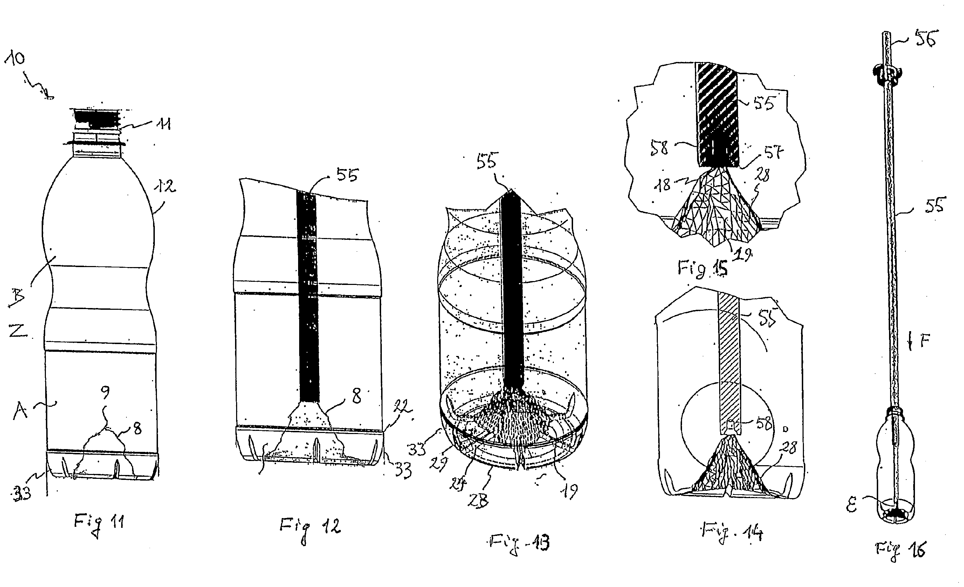

Fig. 8, but even more Fig. 9 and Fig. 15 clearly show to which extent this bottle is perfectly suitable as both an identifying and an appealing device, wherein the appealing function mainly contained in the coloration parameter closely interacts with the identifying function mainly contained in the customized shaping of the bottom, resulting in that the appealing and identification functions mutually reinforce each other.

It is also possible to provide several tips (not illustrated). The number of tips provided can be used as an indication of the class of the product contained therein, in particular regarding quality or type, similar to the use of stars and the like in the classification of products.

Fig. 4 shows a recess 8 with a tip 9 situated on the longitudinal axis $\ell$ of the bottle. This essentially central position of the tip 9 on the axis yields the strongest structure of the bottom when having such a recess 8 constituting an enlarged deformation of the bottom part of the bottle. It also enhances the visibility of the recess and ensures that it is independent from the angle of observation, at least radially.

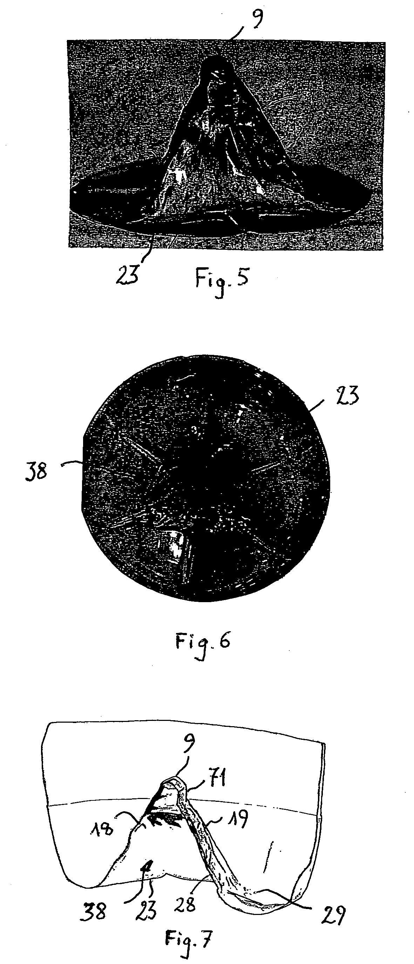

Fig. 5 shows a triangular base 19 with a pyramidal structure of the recess 8, actually a tetrahedral shape. Due to the relatively limited dimensions of the bottle bottom 13 and thus also of the recess 8 accommodated therein, this three-sided embodiment is the simplest one to make. However, square pyramidal shapes or multi-sided ones having pentagonal or even more sides can also be used, even up to a circular base, possibly in combination with a conical shape (not shown).

The hollow structure of the recess 8 is clearly visible in the cross-sectional view of fig. 6 which shows an overall straight profile of the recess section having the average linear configuration of a classic pyramidal structure. However, this section can also be curved, convexly or concavely (not shown). The curve which is directed outwardly with respect to the bottle wall offers the smallest loss of volume owing to the cavity 8. With regard to the cylindrical kick as proposed in some prior art above, the saving of available content in the bottom area of the container according to the invention can reach up to

$$h \times \pi \times R^2 - \frac{Z^2}{2} \times h \times \frac{1}{n}$$ which represents a content loss compensation of more than 75 % in the bottom area of the bottle according to the invention. Especially in the package world, such a saving is significant and not to be neglected. Yet less saving, square or even pentagonal basis are alternative shape embodiments.

This enlarged view of the recess 8 shows that the inner surface facing the interior of the container 10 has a rough appearance and, in addition, has uneven structures or asperities 18. These are substantially elongate and generally arranged radially, and in this case extend from the polygonal base 19 to the tip 9 of the recess, thereby having the appearance of facets 18. When viewed more closely, these facets 18 each have an orientation which varies slightly for each one of them, so that the general appearance of the recess 8 resembles the relief of a typical mountain profile. This forms a distinguished decorative profile, the general appearance of which is illustrated in Figs. 1 & 2, and makes the bottle particularly recognizable to the average consumer. This recess 8 may thus have an elegant or picturesque shape, such as that of a mountain, more particularly of a well-known mountain, such as the "Matterhorn" for example. It is well-known that this mountain has a characteristic shape which can diagrammatically be transferred here to the shape of the recess 8, including thanks to the use of PET with outstanding formability.

The shape of the recess 8 can also be complex, it being composed of a combination of regular shapes, such as determined above, in particular a mountain range in a circuit shape. This wide variation in shapes thus results in a large range of readily recognizable bottles, for example as packaging means. This useful identification means can best be used for identification purposes, which, in view of the ever increasing demands for marketing in the packaging industry is a particularly useful advantage.

These identification options are significantly increased further by the combination with an added identification parameter consisting of the color, as represented in the container 30 illustrated in Figs 8 & 9 showing only the bottom section 13 being colored, while the bottle wall 12 is substantially translucent, possibly even completely transparent, thereby yielding a bottle that is not only easily recognizable but also attractive. It may also be slightly colored. In order to better bring out the color effect of the bottom section 13, in particular of the relief 8 thereof, preference is given to a colorless, completely transparent wall section 12. In addition to the excellent identification capacity which this provides, the colored bottom gives the bottle a distinct elegance, which greatly increases the attractiveness thereof to the average consumer.

The primary color effect 32 can be seen mainly at the recess 8, while the secondary color effect 33 can be seen mainly at the liquid level N and at the optional wall grooves, since this combined color effect is caused by the mirror effect of the colored bottom region 13 which is delimited by the bending point 5. Besides, the container wall 12 acts as a kind of wave conductor, the coloration or color appearance of the bottom 13 of which is transferred via the said mentioned liquid medium 99 to the liquid level N, in particular with containers having a virtually vertical wall. This remarkable transfer of color which originates from a limited zone of the bottle, in particular the bottom 13 thereof, takes place when introducing a suitable liquid 99 therein and the propagating properties thereof, when the liquid is transparent or at least translucent, mainly with containers having at least partially straight walls 12.

This remarkable combined color effect 28 is particularly noticeable when a fluorescent coloring material is used. In this case, the overall color effect 28 can be effected in a particularly remarkable way by combining it with surrounding UV light 29. This is indicated in Fig. 9 by the various arrows.

This highly remarkable embodiment is best suited for bottles intended to contain transparent drinks, such as water, in which case the bottle bottom is best colored using the described technique set out in BE2002/0082. On the basis thereof, the relief 8 is colored with a selected color which is then reflected at the surface N of the transparent filler or can even be scattered in the entire mass of liquid according to the technique employed.

In the case of the preferred embodiment illustrated in Fig. 9, said radiation effect is significantly amplified due to the rough surface of the relief 8, more particularly the presence of the oriented facets 18. The multiplicity of the relevant facets 18, which are distributed over virtually the entire relief 8, on the one hand, and their varied orientation, on the other hand, contribute significantly to the amplification of the visual effect which is brought about by the lit bottom 13 with relief 8. Each twisting uneven structure 18 also acts as a multiple secondary light source when lit, by a marked scattering of the light which is caused by the variation in orientation of the facets 18.

In this way, a particularly attractive and surprising bottle 40 is achieved which can retain a banal and purely functional smooth outer wall 12, yet contains inside a quite surprising bottom 13 as a result of this tailor-made relief 8. The fact that the decorative shape is accommodated in the region 13 of the bottle 10 which is most hidden and isolated from the outside world, results in that the bottle wall 12 can keep its functionality in an optimum manner, which enhances the most secure grip in terms of handling of the bottle. Independent of all limitations in terms of shape, this can only be beneficial for the efficient production of the wall 12.

When storing carbonated drinks, the pressure exerted on the walls of the bottle increases significantly, so that it may be useful to reinforce the specially shaped bottom 13. This reinforcement may be provided by the shape of the bottom itself, in which case a suitably chosen shape will in itself be sufficient to provide the requisite strength to the bottle. Choosing a compact shape is preferable, since this will distribute the stresses in the relief 8 best, at least compared to irregular shapes or shapes which are not compact.

However, if the reinforcement provided by the special shape is in itself insufficient, the thickness on the bottom may be increased, in particular by incorporating an increased thickness 22 in the region which is designed to form the tip 9 of the relief 8 of the bottle 10. Thus, this increased thickness provides an excess of available material, thus preventing a possible crack in the bottom 13. When the bottom is not sufficiently strong, it is possible for cracks to occur during the blowing operation of the bottle. On account of the pressure built up in the bottle in the case of carbonated drinks, the bottom 13 could, for example, start to expand outwards, as a result of which the bottle becomes instable in the vertical position. Due to the bottom with internal reinforcement 22, the amount of material at the bottom 13 is increased, which, furthermore, makes it possible to produce a container with a reinforced bottom. Thus, the risk of cracks appearing in the bottom is virtually eliminated with the said relief shape.

Alternatively or also additionally, reinforcing ribs 23 may be provided at the bottom 13, possibly in combination with the thicker bottom. However, this type of reinforcing rib is known per se and the option of omitting these reinforcing ribs provided with the present invention simplifies the production of this type of bottles.

The present invention also relates to preforms made from plastic material which consist of a neck portion 1 which forms the pouring nozzle, a wall portion 2 which forms the actual body portion 2 of the preform and is designed to be blown up to form a container, and a bottom portion 3 which forms the base. On one side, the neck portion 1 surrounds a pouring opening 25 and on the other side, it merges into said wall 2 to form a neck ring 26. In the base 3, a gate 4 is provided via which the plastic material is injected in an injection mold in order to form the preform.

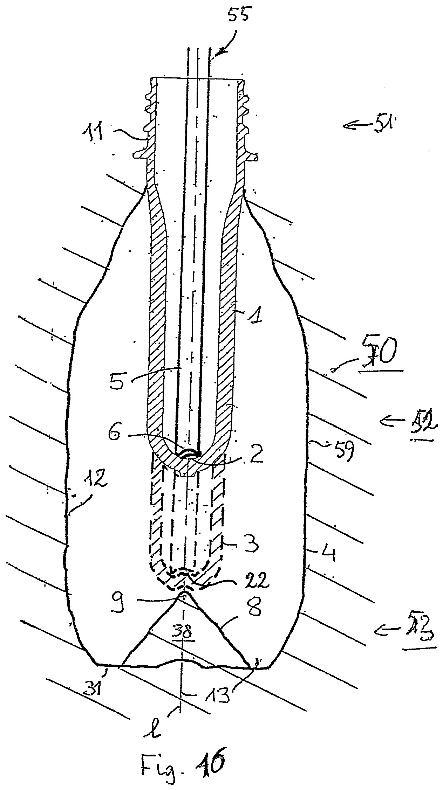

The composite illustration of Fig. 16 furthermore shows a preform 1 as a semi-finished product when producing a bottle 10 therefrom, in which this is formed by an injection molding obtained by blow-forming the preform. The respective production process is as follows.

The preform 1 is heated to a temperature which is higher than the glass transition temperature of the plastic material from which it is made. Advantageously, this is PET since this material has excellent moldability. It is placed in a bottle mold 100. Subsequently, an expansion bar or rod 55 is introduced into the preform 1 via its pouring spout 11 until the active end 57 thereof comes to lie on the inner bottom of the preform 1. Then, the preform 1 is pushed away thereby by means of pressure from the expansion rod 55 via its active end 57, thus drawing the preform 1 into its provisional expanded intermediate shape 3 when touching the molding bottom. Thereafter, compressed air is introduced into the stretched intermediate preform 3, as a result of which the latter expands to produce the final shape 60 which is effected when this expanding wall of the blown intermediate preform 3 has reached the mold 100 everywhere. Then, the bottle 60 is ready to be released.

In order to produce the shape of the recess 8 shown in the diagrammatic representation of Fig. 16, the mold 100 has a corresponding relief 8. In addition, the gate 2 of the provisional intermediate preform 3 has to remain in contact with the tip 9 of the relief 8. To this end, the active end 57 of the expansion rod 55 is provided with a recess 58 which is intended to interact with said tip 9. When said rod 55 pushes onto the bottom of the preform as shown in Fig. 15, it produces a cavity which corresponds therewith, at the bottom of the bottom end of the intermediate preform 3 at the gate 2. Consequently, when the expansion rod 55 finishes its course, said cavity engages with the tip 9 of the relief 8, and is thus forced into an immovable position for as long as the expansion rod 55 is held in this position.

The final course position is chosen such that the basic preform 1 does not press against the tip 9 of the relief 8, but, on the contrary, is located slightly above it ε, typically by a few tenths of millimeters. Nevertheless, the recess 58 remains locked around the tip 9 of the relief 8.

The method described above mainly uses standard preforms 1, as long as production is limited to bottles having no special reinforcement at the location of their bottom 13. This is the case e.g. with bottles for still drinks, i.e. without carbon dioxide.

By contrast, bottles for carbonated drinks do require reinforced bottoms 13 in order to prevent the bottom 13 from bending under the action of the interior pressure built up by carbon dioxide escaping. This would mean that the bottle would lose all stability in the vertical position. If the reinforcement provided by the relief 8 created is insufficient and a special reinforcement is required, the shape of the bottom 13 becomes more complex. If the above-described method is used in its unmodified form and without additional preventive measures, cracks may appear during the blowing operation. In order to prevent such cracks, the basic preform 1 needs to undergo further modification. An increased thickness is then provided at the location of the gate 2 in the area which is intended to become the tip 9 of the relief 8. This increased thickness 22 thus provides a supply of available material, by means of which it is possible to prevent cracks in the bottom 13.

A bottle 10 is achieved having a double reinforcement, based on a conventional reinforcement as described above, on the one hand, and the reinforcement produced by the relief 8, on the other hand. This allows to limit the customary thickening and thereby to save material. In certain cases, this conventional reinforcement can even be completely omitted, thus simplifying production.

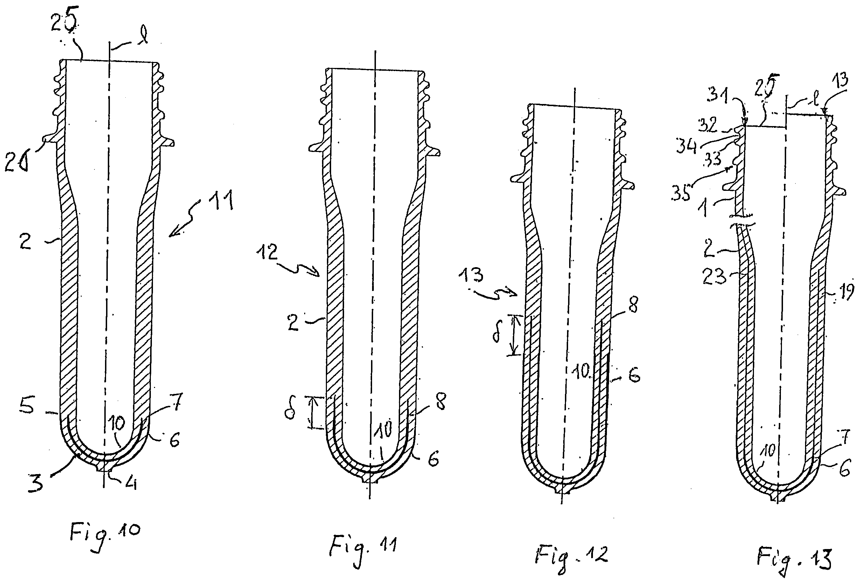

In a further exemplary embodiment, a preform 40 is provided with a double anti-drip pouring edge as shown in Fig. 13.

If need be, the container can also be produced directly instead of through a preform, for example by injection in a mold intended for the purpose.

It is preferred to use PET as the plastic material of the bottle, since this material offers a particularly large degree of freedom regarding shape, which can be used optimally in the present invention.

In addition to the above-described embodiments, some possible variant embodiments will be described below. At first, relatively simple forms having smooth surfaces which can be classic elementary geometrical shapes, such as cones, possibly frustoconical, or parallelipipeds or even combinations thereof may be proposed, if desired having the said rough surface profile.

Also more complex shapes may be proposed, such as a combination for example of different mountains in a circuit like circular shape, in order thus to form a mountain range having a virtually annular profile, thus enabling a reduction of the loss of volume compared to a single massive mountain.

Other realistic shapes are also possible, such as emblematic monuments, for example a stylized Eifel tower and finally also pure fantasy shapes to reproduce logos on an enlarged scale on the bottom of the bottle, as a result of which this then is an outstanding identification means.

Furthermore, color variations can be provided as additional both appealing and identification means, such as for example an additional white coloring on the tip of the mountain shown here, by adding white pigment or colorants during injection of the respective plastic material during the production process, thus producing a snow effect on the mountain.

A further area of application is based on an association between the shape of the bottom and the contents of the bottle, the latter being designed to contain flavored water consisting of water provided with a light fruit flavor and to use the associated fruit as identification means in the bottom. These types of water remain completely transparent and are usually not colored, so that the shaped bottom is readily visible to the consumer, in particular if the shaped bottom is colored, preferably in a color which corresponds to that of the fruit in question, such as a strawberry, pear, half lemon or other half fruit shape, for example.

As a result of the high-precision techniques in combination with the greater height dimensions which have been chosen here for the recess in the bottom, it is thus possible to reproduce very typical shapes. Due to the large range of possible shapes which are thus available, this type of bottle can be used extremely well as excellent identification means having an outstanding identification capability. After all, a bottle which is thus equipped can consciously be associated with a certain product for which it is intended to be the container. This association may be regional in nature by associating the place of origin of the product contained in the bottle with the selected shape, but this is not obligatory. The association may also be purely aimed at the product and may, in this case, be linked to a marketing campaign for example. In this respect, this embodiment allows to provide a set of bottles which are suitably identifiable even without any label by using an appropriated shaping in the bottom each evoking the intended fruit for instance, possibly associated or combined with the appropriated colour corresponding to the fruit that can be suitably represented by the best featuring half thereof, in such a way that the half shape can be suitably injection molded according to a preferred embodiment.

Owing to this very original product, an excellent customized solution is thus available requiring a limited number of production steps during manufacture of the product.

**Claims**

1.  Container made of plastic comprising a neck portion (11), a body part (12) attached thereto, a shoulder section between said neck portion and said body part thereof and a bottom portion (13) having a determined circumference (23), each extending along a longitudinal axis ($\ell$), wherein said bottom part (13) has a recess (8) delimitated by sides encompassing a hollow space therein (13) having a significant volume, wherein said recess (8) has at least one protruding tip (9) with a significant height, wherein said recess (8) and its said hollow space form identification means (80) for identifying said container (10, 20), which are located at said bottom (13) and which thus have a complete three dimensional shape extending significantly including in height, and in that said wall portion (12) is translucent, preferably transparent over at least a significant part thereof (12) making said recess (8) and its said protruding tip (9) visible through said wall portion (12), thereby enabling the identification of said recess (8) acting as identification means (80);
    particularly wherein said recess (8) has a surface that is at least partially rough, respectively comprising asperities (18); more particularly wherein said asperities (18) have a variety of irregularly shaped facets (19) that are spread out over said recess (8), **characterized in that** said container is composed of a primary plastic basis material and at least one additional secondary material, at least in a sub-region thereof, *and* **in that** said container comprises at least two sub-regions (A, B) having a mutually different dye or coloration, which are mutually adjacent; wherein said subregion (B) is constituted by the recess (8), whereas the remaining parts (33) of the bottom region and the adjacent wall part (12) to the bottom constitute said subregion (A); more particularly wherein it is composed of a primary, and at least one secondary area, wherein said primary area (A) consists of a primary plastic material, and said at least one secondary area (B) consisting of at least one secondary material, said primary and secondary areas having a mutually different coloration, and **in that** at least a substantial part of said bottom section (3) is composed of a multi-layer structure having primary layers composed of said primary plastic material, and additional secondary layers (6, 7, 10) composed of the said at least one secondary material, which include two surface layers the one of which (6) is directed outwardly respective the preform, whereas the other one is directed inwardly (10), with an intermediate secondary layer located in between (7), thereby constituting a core layer, which is further located between two said primary layers, wherein said primary and secondary materials at least partially flow in each other.

2.  Container according to claim 1, **characterized in that** at least one of said tips (9) is provided with delimitating means (71) for delimitating geometrically said tip (9) protruding with respect to its said sides (17); particularly wherein said delimitating means (71) have a fairly discontinuous profile with respect to said tip (9) so as to enhance the visibility of the top for improving said identifying purpose; more particularly wherein at least one of said tips (9) has substantially at least the same magnitude as the distance between said axis ($\ell$) and said bottom circumference (23) and/or **in that** at least one of said tips (9) is located substantially on said axis ($\ell$).

3.  Container according to one of the preceding claims, **characterized in that** said recess (8) has a shape that is compact and/or **in that** said recess (8) has a basis (29) with polygonal shape, in particular triangular and/or **in that** said recess (8) has a substantially regular shape, wherein its said sides (17) have mutually substantially equal surfaces and/or **in that** the shape of the recess (8) is complex, in particular wherein it is composed of a combination of said regular shapes.

4.  Container according to one of the claims 1 to 3, **char-**

**acterized in that** said recess (8) has an irregular and/or asymmetric shape, wherein its said sides (17) have varying shapes, particularly wherein said relief (8) has a customizable shape that is unique for identifying purposes, particularly wherein said relief (8) has a featuring or customized mountain profile (48).

5. Container according to one of the preceding claims, **characterized in that** said asperities (18) are mainly longitudinal, or twisted and/or **in that** said asperities (18) are mostly directed radial extending from said top (9) to said basis (29).

6. Container according to one of the preceding claims, **characterized in that** said wall portion (12) is not colored over at least a significant part thereof and/or **in that** it has appealing means (90) in addition to said identification means (80) thereby providing an appealing effect in addition to the identifying power of said identification means (80) and/or **in that** said appealing means (90) consist of dying means, particularly wherein said bottom (13) is colored or dyed, thereby providing an appealing effect in addition to said identifying power in said identification means (110), wherein said identification means (110) also act as appealing means (120) and vice versa.

7. Container according to one of the preceding claims, **characterized in that** said bottom (13) is at least translucent.

8. Container according to one of the preceding claims, **characterized in that** at least one of said additional layers (6, 7, 8, 9, 10') is composed of a mixture of plastic as said secondary material with a colour dye; particularly wherein said mixture includes the same dye for at least two of said additional secondary layers (6, 7, 8, 9, 10); more particularly wherein said color dyes are selected from the list consisting of a fluorescent, phosphorescent, or luminescent dye in at least one of the additional secondary layers.

9. Preform (1) to be processed to a container as defined in any of the preceding claims, **characterized in that** it is composed of a primary plastic material, in particular of polyethylene terephthalate (PET) and **in that** at least a substantial part of said bottom section (3) is composed of a multi-layer structure having primary layers composed of said primary plastic material, and additional secondary layers (6, 7, 10) composed of the said at least one secondary material, which include two surface layers the one of which (6) is directed outwardly respective the preform, whereas the other one is directed inwardly (10), with an intermediate secondary layer located in between (7), thereby constituting a core layer, which is further located between two said primary layers, wherein said primary and secondary materials at least partially flow in each other.

10. Method for the manufacturing of a container as defined in any one of the claims 1 to 8, consisting of a first step for manufacturing a preform (1), which is followed by a second step for making a bottle-like container (10) in a dye or mould (50) which is provided to give its final shape to the container, by biaxial stretching said preform (1) and blow molding it, wherein said mould has a neck section (51) which is intended for the pouring spout (11), an adjacent wall section (52) and a further adjacent bottom section (53) that is intended to provide a supporting surface (31) to the container (10), wherein said second step of stretching and blow molding step comprises the following substeps:

    - pulling the perform (1) by means of a stretching rod (55) which is introduced in to the mould through the pouring spout (11), wherein said pulling stretching rod (55) is maintained or fixed at one of its ends (56), and which presses the bottom end (2) of the perform (1) against the bottom section (53) of said dye or mould (50) by means of its other end (57), thereby acting as an active end (57);
    - expanding the thus obtained intermediate preform (3) by stretching, by blowing it (3) until it presses or gets pressed against the walls (59) of the mould (50), said container (10) being thus made,

    **characterized in that** a recess (8) with noticeable relief (8) with tip (9) is shaped in to the bottom section (13) by means of a stretching rod (35) that is provided at its active end (57) with a recess (58) which cooperates with the tip (9) of said relief (8), thereby getting in the bottom (53) of said dye (50), so as to generate a suitable positioning or location of said active end (57) of the stretching rod (55).

11. Method according to the preceding claim, **characterized in that** the downward motion (F) of the rod (55) is interrupted at small distance ($\varepsilon$) of the tip (9); particularly wherein the manufacturing step of the preform, more particularly as defined in claim 10, consists of an injection molding process comprising the following substeps :

    - first injecting a liquid secondary material at a temperature which is at least equal to the melting temperature thereof, that becomes hard when impinging the relatively cold surfaces (59) with respect thereto of said dye or mould (50) and of a kernel (58) in the bottom section of the preform (1);
    - subsequently injecting a liquid primary material at a temperature that is at least equal to the melting temperature thereof, which flows to the wall section (52) and said neck section (51), thereby taking substantially the whole volume of said wall and neck sections, and two layers in the bottom section (63) of the secondary layer that are in contact with yet introduced secondary material; finally further injecting secondary material in the remaining volume thereby filling up said remaining volume in the bottom section, wherein an intermediate layer (47) is thus generated in the bottom section (63), wherein said primary material is at least translucent, preferably even transparent, and/or not dyed and wherein secondary material is colored ; particularly wherein elongated length sections (18) are grooved on or in the inwardly directed surface of the recessing relief (8) according to a determined directed pattern; more particularly wherein said elongated sections (18) are grooved substantially regularly or in a substantial regular direction according to the flowing direction of the injected material from the circumference (18) of the recess (8) to the tip (9) thereof, with a noticeable variety of the mutual directions of said elongated sections (18).

12. Device for blowing a preform (1) to a container (10) for carrying out the method defined in one of the claims 10 or 11, for manufacturing a container as defined in one of the claims 1 to 8, respectively of a preform as defined in claim 9; particularly wherein said recess (58) is substantially conical; more particularly wherein the bottom section (12) of the mould (7) has a noticeable relief (8), wherein the recess (6) is adapted to the tip (9) of said relief (8) so as to cooperate therewith when reaching the bottom of the mould, wherein said noticeable relief (8) has a summit (9), which is located substantially on the central axis ($\ell$) of the mould (7).

13. Use of a container as defined in one of the claims 1 to 8, **characterized in that** said container is for fluids, in particular for beverages, more particularly translucent or preferably transparent ones; particularly wherein it is filled with a light scattering medium (30), especially a liquid medium with high diffusion capacity, in particular water; more particularly of a container according to claim 8 when it depends on one of the claims 5 to 8, wherein the bottom limited coloration (25) is scattered over virtually the whole container (15, 16) upon filling it (30), especially at the free medium level, in particular liquid level (N) in the container.

14. Use of a container according to the preceding claim, wherein said container (15, 16) is placed in artificial light, especially UV radiation (29), particularly of a container according to one of the claims 5 to 8, wherein the visible radiation is mainly directed on the bottom (13) provided with said relief (8), preferably with its various and several facets (19), each having its own direction thereby reflecting the impinging light in substantially all directions, thereby acting as a secondary fight source with a high dispersing capacity, which is the greater as the variation of the directions of the facets (19) is greater; more particularly of said container as an identification means, wherein its recess (8) has a shape that is composed of a featuring symbol or logo that is chosen specifically for said identification; yet more particularly as an appealing means, wherein its recess (8) has a shape that is composed of a featuring symbol or logo that is chosen specifically for said identification, thereby possibly combining both identification and appealing actions.

**Patentansprüche**

1. Behälter aus Kunststoff, umfassend einen Halsabschnitt (11), einen daran angefügten Körperteil (12), einen Schulterabschnitt zwischen dem Nackenabschnitt und dem Körperteil davon und einen Bodenabschnitt (13) mit einem bestimmten Umfang (23), die sich jeweils entlang einer Längsachse ($\ell$) erstrecken, wobei der Bodenteil (13) eine Aussparung (8) aufweist, die von Seiten eingegrenzt ist, welche einen Hohlraum (13) mit einem signifikanten Volumen darin umgeben, wobei die Aussparung (8) wenigstens eine hervorstehende Spitze (9) mit einer signifikanten Höhe umfasst, wobei die Aussparung (8) und ihr Hohlraum Identifikationsmittel (80) zum Identifizieren des Behälters (10, 20) ausbilden, die sich an dem Boden (13) befinden, und die somit eine vollständige dreidimensionale Form aufweisen, die sich signifikant einschließlich in der Höhe erstrecken, und der Wandabschnitt (12) über wenigstens einen signifikanten Teil davon (12) lichtdurchlässig, vorzugsweise transparent ist, was die Aussparung (8) und deren hervorstehende Spitze (9) durch den Wandabschnitt (12) sichtbar macht, was die Identifikation der Aussparung (8), die als Identifikationsmittel (80) fungiert, ermöglicht; insbesondere wobei die Aussparung (8) eine Oberfläche aufweist, die wenigstens teilweise rau ist, jeweils Unebenheiten (18) umfassend; insbesondere wobei die Unebenheiten (18) eine Vielfalt von unregelmäßig geformten Facetten (19) umfassen, die über die Aussparung (8) verteilt sind,

**dadurch gekennzeichnet, dass** sich der Behälter aus einem Material vorwiegend auf Kunststoffbasis und wenigstens einem zusätzlichen sekundären Material, wenigstens in einer Teilregion davon, zusammensetzt, und dass der Behälter wenigstens zwei Teilregionen (A, B) mit einer voneinander verschiedenen Farbe oder Tönung, die aneinandergrenzen, umfasst; wobei die Teilregion (B) aus der Aussparung (8) besteht, wobei die übrigen Teile (33) der Bodenregion und der benachbarte Wandteil (12) des Bodens die Teilregion (A) bilden; wobei er sich insbesondere aus einem primären und wenigstens einem sekundären Bereich zusammensetzt, wobei der primäre Bereich (A) aus einem primären Kunststoffmaterial besteht, und der wenigstens eine sekundäre Bereich (B) aus wenigstens einem sekundären Material besteht, wobei der primäre und sekundäre Bereich eine voneinander verschiedene Tönung aufweisen, und dass sich wenigstens ein wesentlicher Teil des Bodenabschnitts (3) aus einer Mehrschichtstruktur zusammensetzt, die sich aus aus dem primären Kunststoffmaterial zusammengesetzten primäre Schichten und aus dem wenigstens einen sekundären Material zusammengesetzten zusätzlichen sekundären Schichten (6, 7, 10) zusammensetzt, die zwei Oberflächenschichten umfassen, von denen eine (6) bezüglich der Vorform nach außen gerichtet ist, während die andere nach innen gerichtet ist (10), mit einer dazwischen angeordneten sekundären Zwischenschicht (7), wodurch eine Kernschicht gebildet wird, die ferner zwischen zwei der primären Schichten angeordnet ist, wobei das primäre und das sekundäre Material wenigstens teilweise ineinander übergehen.

2. Behälter nach Anspruch 1, **dadurch gekennzeichnet, dass** wenigstens eine der Spitzen (9) mit Eingrenzungsmitteln (71) zum geometrischen Eingrenzen der Spitze (9), die in Bezug auf die Seiten (17) hervorsteht, vorgesehen ist; wobei die Eingrenzungsmittel (71) in Bezug auf die Spitze (9) ein einigermaßen unregelmäßiges Profil aufweisen, damit die Sichtbarkeit des oberen Teils zur Verbesserung des Identifikationszweckes verstärkt wird; wobei wenigstens eine der Spitzen (9) im Wesentlichen wenigstens die gleiche Größenordnung wie die Distanz zwischen der Achse ($\ell$) und dem Bodenumkreis (23) aufweist und/oder dass wenigstens eine der Spitzen (9) im Wesentlichen auf der Achse ($\ell$) angeordnet ist.

3. Behälter nach einem der vorausgehenden Ansprüche, **dadurch gekennzeichnet, dass** die Aussparung (8) eine Form aufweist, die kompakt ist, und/oder dass die Aussparung (8) eine Basis (29) mit polygonaler Form, insbesondere dreieckig, aufweist, und/oder dass die Aussparung (8) eine im Wesentlichen regelmäßige Form aufweist, wobei die Seiten (17) zueinander im Wesentlichen gleiche Flächen aufweisen und/oder dass die Form der Aussparung (8) komplex ist, wobei sie sich insbesondere aus einer Kombination der regelmäßigen Formen zusammensetzt.

4. Behälter nach einem der Ansprüche 1 bis 3, **dadurch gekennzeichnet, dass** die Aussparung (8) eine unregelmäßige und/oder asymmetrische Form aufweist, wobei ihre Seiten (17) variierende Formen aufweisen, wobei das Relief (8) insbesondere eine individualisierbare Form hat, die zu Identifikationszwecken einzigartig ist, wobei das Relief (8) insbesondere ein kennzeichnendes oder individualisiertes Bergprofil (48) aufweist.

5. Behälter nach einem der vorausgehenden Ansprüche, **dadurch gekennzeichnet, dass** die Unebenheiten (18) hauptsächlich länglich oder verdreht sind und/oder dass die Unebenheiten (18) radial ausgerichtet sind und sich von dem oberen Teil (9) zu der Basis (29) erstrecken.

6. Behälter nach einem der vorausgehenden Ansprüche, **dadurch gekennzeichnet, dass** der Wandabschnitt (12) über wenigstens einen signifikanten Teil davon nicht getönt ist und/oder dass er zusätzlich zu den Identifikationsmitteln (80) Gefälligkeitsmittel (90) umfasst, wodurch ein gefälliger Effekt zusätzlich zu dem identifizierenden Vermögen der Identifikationsmittel (80) bereitgestellt wird und/oder dass die Gefälligkeitsmittel (90) aus Färbemitteln bestehen, wobei der Boden (13) insbesondere getönt oder gefärbt ist, wodurch ein gefälliger Effekt zusätzlich zu dem identifizierenden Vermögen der Identifikationsmittel (110) bereitgestellt wird, wobei die Identifikationsmittel (110) auch als Gefälligkeitsmittel (120) fungieren, und umgekehrt.

7. Behälter nach einem der vorausgehenden Ansprüche, **dadurch gekennzeichnet, dass** der Boden (13) wenigstens lichtdurchlässig ist.

8. Behälter nach einem der vorausgehenden Ansprüche, **dadurch gekennzeichnet, dass** sich wenigstens eine der zusätzlichen Schichten (6, 7, 8, 9, 10') aus einer Kunststoffmischung als das sekundäre Material mit einem Farbstoff zusammensetzt; wobei die Mischung insbesondere die gleiche Farbe für wenigstens zwei der zusätzlichen sekundären Schichten (6, 7, 8, 9, 10) beinhaltet; wobei die Farbstoffe insbesondere aus der Liste bestehend aus einer fluoreszierenden, phosphoreszierenden oder lumineszierenden Farbe in wenigstens einer der zusätzlichen sekundären Schichten ausgewählt sind.

9. Vorform (1), der zu einem wie in einem der vorausgehenden Ansprüche definierten Behälter zu verarbeiten ist, **dadurch gekennzeichnet, dass** er sich aus einem primären Kunststoffmaterial, insbesondere Polyethylenterephthalat (PET) zusammensetzt, und dass sich wenigstens ein wesentlicher Teil des Bodenabschnitts (3) aus einer Mehrschichtstruktur zusammensetzt, welche primäre Schichten, die sich aus dem primären Kunststoffmaterial zusammensetzen, und zusätzliche sekundäre Schichten (6, 7, 10), die sich aus dem wenigstens einen sekundären Material zusammensetzen, umfasst, welche zwei Oberflächenschichten umfassen, von denen eine (6) bezüglich der Vorform nach außen gerichtet ist, während die andere nach innen gerichtet ist (10), mit einer dazwischen angeordneten sekundären Zwischenschicht (7), wodurch eine Kernschicht gebildet wird, die ferner zwischen zwei der primären Schichten angeordnet ist, wobei das primäre und das sekundäre Material wenigstens teilweise ineinander übergehen.

10. Verfahren zur Herstellung eines Behälters nach einem der Ansprüche 1 bis 8, bestehend aus einem ersten Schritt zur Herstellung einer Vorform (1), gefolgt von einem zweiten Schritt zum Fertigen eines flaschenartigen Behälters (10) in einer Farbe oder Gussform (50), bereitgestellt, um dem Behälter seine finale Form zu geben, durch biaxiale Streckung der Vorform (1) und dessen Blasformung, wobei die Gussform einen für den Ausguss (11) vorgesehenen Halsabschnitt (51), einen benachbarten Wandabschnitt (52) und einen weiteren benachbarten unteren Abschnitt (53), welcher zum Bereitstellen einer Stützfläche (31) für den Behälter (10) vorgesehen ist, umfasst, wobei der zweite Schritt der Streckung und des Blasformungsschrittes die folgenden Teilschritte umfasst:

- Ziehen der Vorform (1) mithilfe eines Streckstabes (55), der durch den Ausguss (11) in die Gussform eingeführt wird, wobei der Zugstreckstab (55) an einem seiner Enden (56) gehalten oder fixiert wird, und der das untere Ende (2) der Vorform (1) mithilfe seines anderen Endes (57) gegen den unteren Abschnitt (53) der Farbe oder Gussform (50) drückt, wodurch es als ein aktives Ende (57) fungiert;
- Expandieren des so erhaltenen Zwischenrohlings (3), indem er gestreckt, indem er geblasen wird (3), bis er gegen die Wände (59) der Gussform (50) drückt oder dagegen gedrückt wird, wodurch der Behälter (10) gefertigt wird,

**dadurch gekennzeichnet, dass** eine Aussparung (8) mit bemerkbarem Relief (8) mit der Spitze (9) mithilfe eines Streckstabes (35), der an seinem aktiven Ende (57) mit einer Aussparung (58) versehen ist, welche mit der Spitze (9) des Reliefs (8) zusammenwirkt, wodurch sie in den unteren Teil (53) der Farbe (50) gelangt, in den Bodenabschnitt (13) geformt wird, sodass eine geeignete Positionierung oder Position des aktiven Endes (57) des Streckstabes (55) erzeugt wird.

11. Verfahren nach dem vorausgehenden Anspruch, **dadurch gekennzeichnet, dass** die Abwärtsbewegung (F) des Stabes (55) um eine kleine Distanz ($\epsilon$)

von der Spitze (9) unterbrochen ist; wobei insbesondere der Herstellungsschritt der Vorform, insbesondere wie in Anspruch 10 definiert, aus einem Spritzgussverfahren besteht, das die folgenden Teilschritte umfasst:

- zunächst Spritzgießen eines flüssigen sekundären Materials bei einer Temperatur, die wenigstens gleich der Schmelztemperatur davon ist, das hart wird, wenn es auf die diesbezüglichen relativ kalten Flächen (59) der Farbe oder Gussform (50) und eines Kerns (58) in dem unteren Abschnitt der Vorform (1) trifft;
- anschließendes Spritzgießen eines flüssigen primären Materials bei einer Temperatur, die wenigstens gleich der Schmelztemperatur davon ist, das zu dem Wandabschnitt (52) und dem Halsabschnitt (51) fließt, wodurch im Wesentlichen das gesamte Volumen des Wand- und Halsabschnitts und zwei Schichten in dem unteren Abschnitt (63) der sekundären Schicht, die mit noch eingeführtem sekundärem Material in Kontakt treten, eingenommen werden; schließlich weiteres Spritzgießen des sekundären Materials in das übrige Volumen, wodurch das übrige Volumen in dem unteren Teil aufgefüllt wird, wobei in dem unteren Abschnitt (63) dadurch eine Zwischenschicht (47) erzeugt wird, wobei das primäre Material wenigstens lichtdurchlässig, vorzugsweise sogar transparent, und/oder nicht gefärbt ist, und wobei das sekundäre Material getönt ist; wobei längliche Längenabschnitte (18) insbesondere auf oder in der nach innen gerichteten Oberfläche des Aussparungsreliefs (8) gemäß einem bestimmten gerichteten Muster gekerbt sind; wobei die länglichen Abschnitte (18) insbesondere im Wesentlichen regelmäßig oder in einer im Wesentlichen regelmäßigen Richtung gemäß der Fließrichtung des eingespritzten Materials von dem Umkreis (18) der Aussparung (8) zu der Spitze (9) davon mit einer bemerkbaren Vielfalt der gegenseitigen Richtungen der länglichen Abschnitte (18) gekerbt sind.

12. Vorrichtung zum Blasen einer Vorform (1) zu einem Behälter (10) zum Ausführen des Verfahrens nach einem der Ansprüche 10 oder 11 zur Herstellung eines Behälters nach einem der Ansprüche 1 bis 8 beziehungsweise eines Rohlings nach Anspruch 9; wobei die Aussparung (58) insbesondere im Wesentlichen konisch ist; wobei der untere Abschnitt (12) der Gussform (7) insbesondere ein bemerkbares Relief (8) aufweist, wobei die Aussparung (6) auf die Spitze (9) des Reliefs (8) angepasst ist, damit sie damit zusammenwirkt, wenn sie den Boden der Gussform erreicht, wobei das bemerkbare Relief (8) einen Gipfel (9) aufweist, der sich im Wesentlichen auf der Mittelachse (ℓ) der Gussform (7) befindet.

13. Verwendung eines Behälters nach einem der Ansprüche 1 bis 8, **dadurch gekennzeichnet, dass** der Behälter für Flüssigkeiten, insbesondere für Getränke, insbesondere lichtdurchlässige oder vorzugsweise transparent ist; wobei er insbesondere mit einem lichtstreuenden Medium (30), insbesondere einem flüssigen Medium mit hoher Diffusionskapazität, insbesondere Wasser gefüllt ist; insbesondere eines Behälters nach Anspruch 8, wenn er von einem der Ansprüche 5 bis 8 abhängig ist, wobei die bodenbegrenzte Färbung (25) über nahezu den gesamten Behälter (15, 16) verteilt wird, wenn dieser gefüllt wird (30), insbesondere bei dem freien Mediumpegel, insbesondere Flüssigkeitspegel (N) des Behälters.

14. Verwendung eines Behälters nach dem vorausgehenden Anspruch, wobei der Behälter (15, 16) in künstliches Licht, insbesondere UV-Strahlung (29) platziert wird, insbesondere eines Behälters nach einem der Ansprüche 5 bis 8, wobei die sichtbare Strahlung hauptsächlich an dem mit dem Relief (8) versehenen Boden (13) gerichtet ist, vorzugsweise mit seinen unterschiedlichen und mehreren Facetten (19), von denen jede ihre eigene Richtung hat, wodurch das auftreffende Licht in im Wesentlichen alle Richtungen reflektiert wird, wodurch er als eine sekundäre Lichtquelle mit einer hohen Dispersionskapazität fungiert, die umso höher ist, je größer die Variation der Richtungen der Facetten (19) ist; insbesondere des Behälters als ein Identifikationsmittel, wobei seine Aussparung (8) eine Form aufweist, die sich aus einem kennzeichnenden Symbol oder Logo zusammensetzt, das spezifisch für die Identifikation ausgewählt ist; insbesondere als ein Gefälligkeitsmittel, wobei seine Aussparung (8) eine Form aufweist, die sich aus einem kennzeichnenden Symbol oder Logo zusammensetzt, die spezifisch für die Identifikation ausgewählt ist, wodurch möglicherweise sowohl die Identifikations- als auch Gefälligkeitsfunktion kombiniert werden.

## Revendications

1. Récipient en matière plastique comprenant une section de col (11), une section de corps (12) fixée à celle-ci, une section d'épaulement entre ladite section de col et ladite section de corps et une section de fond (13) ayant une circonférence déterminée (23) chacune des sections s'étendant le long d'un axe longitudinal (ℓ), dans lequel ladite section de fond (13) présente un évidement (8) délimité par des côtés entourant un espace creux (13) de volume important, dans lequel ledit évidement (8) présente au moins un bout saillant (9) de hauteur significative, dans lequel ledit évidement (8) et son espace creux forment des moyens d'identification (80) pour identifier ledit récipient (10, 20), qui sont situés au niveau dudit fond (13) et qui ont ainsi une forme résolument tridimensionnelle s'étendant de façon significative aussi en hauteur, et en ce que ladite section de paroi (12) est translucide, de préférence transparente sur au moins une partie importante de celle-ci (12), en rendant visible ledit évidement (8) et son bout saillant (9) à travers ladite section de paroi (12), permettant ainsi l'identification dudit évidement (8) agissant comme moyen d'identification (80); en particulier dans lequel ledit évidement (8) présente une surface qui est au moins partiellement rugueuse, ou comprenant des aspérités (18) respectivement; plus particulièrement dans lequel lesdites aspérités (18) ont une variété de facettes (19) de forme irrégulière qui sont réparties sur ledit évidement (8), **caractérisé en ce que** ledit récipient est constitué d'un matériau de base en plastique primaire et d'au moins un matériau secondaire supplémentaire, au moins dans une sous-région de celle-ci, et **en ce que** ledit récipient comprend au moins deux sous-régions (A, B) ayant une teinte ou une coloration différente, qui sont mutuellement adjacentes; dans lequel ladite sous-région (B) est constituée par l'évidement (8), tandis que les parties restantes (33) de la zone de fond et la section de paroi (12) adjacente au fond constituent ladite sous-région (A); plus particulièrement dans lequel elle est composée d'une zone primaire et d'au moins une zone secondaire, dans laquelle ladite zone primaire (A) est constituée d'une matière plastique primaire, et ladite au moins une zone secondaire (B) est constituée d'au moins un matériau secondaire, lesdites zones primaires et secondaires ayant une coloration mutuellement différente, et **en ce qu'**au moins une partie substantielle de ladite section de fond (3) est constituée d'une structure multicouche comportant des couches primaires constituées de ladite matière plastique principale, et des couches secondaires supplémentaires (6, 7, 10) composée dudit au moins un matériau secondaire, qui comprennent deux couches de surface dont l'une (6) est dirigée vers l'extérieur par rapport au récipient, tandis que l'autre est dirigée vers l'intérieur (10), avec une couche secondaire intermédiaire située entre celles-ci (7), constituant ainsi une couche centrale qui est en outre située entre les deux couches primaires, lesdits matériaux primaire et secondaire s'écoulant au moins partiellement l'un dans l'autre.

2. Récipient selon la revendication 1, **caractérisé en ce que** au moins l'une desdites pointes (9) est pourvue de moyens de délimitation (71) pour délimiter géométriquement ladite pointe (9) faisant saillie par rapport à ses côtés (17) précités; en particulier dans lequel lesdits moyens de délimitation (71) ont un profil relativement discontinu par rapport à ladite pointe (9) de manière à améliorer la visibilité du sommet pour améliorer la faculté d'identification; plus particulièrement dans lequel au moins l'un desdits sommets (9) présente sensiblement au moins la même amplitude que la distance entre ledit axe (ℓ) et ledit pourtour de fond (23) et/ou **en ce qu'**au moins l'un desdits sommets (9) est situé pratiquement sur ledit axe (ℓ).

3. Récipient selon l'une des revendications précédentes, **caractérisé en ce que** ledit évidement (8) a une forme compacte et/ou **en ce que** ledit évidement (8) présente une base (29) de forme polygonale, en particulier triangulaire et/ou **en ce que** ledit évidement (8) a une forme sensiblement régulière, dans lequel ses faces précitées (17) ont des surfaces mutuellement sensiblement égales et/ou **en ce que** la forme de l'évidement (8) est complexe, notamment **en ce qu'**elle est composée d'une combinaison desdites formes régulières.

4. Récipient selon l'une quelconque des revendications 1 à 3, **caractérisé en ce que** ledit évidement (8) présente une forme irrégulière et/ou asymétrique, dans lequel ses côtés précités (17) ont des formes variables, en particulier dans lequel ledit relief (8) présente une forme personnalisable unique à des fins d'identification, en particulier dans lequel ledit relief (8) présente un profil de montagne (48) caractéristique ou personnalisé.

5. Récipient selon l'une des revendications précédentes, **caractérisé en ce que** lesdites aspérités (18) sont principalement longitudinales, ou torsadées et/ou **en ce que** lesdites aspérités (18) sont principalement dirigées radialement s'étendant dudit sommet (9) à ladite base (29).

6. Récipient selon l'une quelconque des revendications précédentes, **caractérisé en ce que** ladite partie de paroi (12) n'est pas colorée sur au moins une partie significative de celle-ci et/ou **en ce qu'**il comporte des moyens d'appel (90) en plus desdits moyens d'identification (80), de façon à procurer un effet d'appel en plus de la faculté d'identification desdits moyens d'identification (80) et/ou **en ce que** lesdits moyens d'appel (90) sont constitués de moyens de coloration, en particulier dans lequel ledit fond (13) est coloré ou teint, ce qui fournit un effet d'appel en plus de la capacité d'identification dans ledit moyen d'identification (110), dans lequel lesdits moyens d'identification (110) agissent également en tant que moyens d'appel (120) et vice versa,

7. Récipient selon l'une des revendications précédentes, **caractérisé en ce que** ledit fond (13) est au moins translucide.

8. Récipient selon l'une des revendications précédentes, **caractérisé en ce qu'**au moins l'une desdites couches supplémentaires (6, 7, 8, 9, 10') se compose d'un mélange de matière plastique en tant que matière secondaire précitée avec une teinte colorante; en particulier dans lequel ledit mélange comprend le même colorant pour au moins deux desdites couches secondaires additionnelles (6, 7, 8, 9, 10); plus particulièrement dans lequel lesdites teintes colorantes sont choisies dans la liste constituée d'un colorant fluorescent, phosphorescent ou luminescent dans au moins l'une des couches secondaires supplémentaires.

9. Préforme (1) à transformer en récipient selon l'une quelconque des revendications précédentes, **caractérisée en ce qu'**elle est composée d'une matière plastique primaire, notamment de poly(téréphtalate d'éthylène) (PET), et **en ce qu'**au moins une partie substantielle de ladite section de fond (3) est constituée d'une structure multicouche comportant des couches primaires constituées de ladite matière plastique principale, et des couches secondaires supplémentaires (6, 7, 10) composée dudit au moins un matériau secondaire, qui comprennent deux couches de surface dont l'une (6) est tournée vers l'extérieur par rapport à la préforme, tandis que l'autre est tournée vers l'intérieur (10), avec une couche secondaire intermédiaire située entre celles-ci (7), constituant ainsi une couche centrale qui est en outre située entre les deux couches primaires, lesdits matériaux primaire et secondaire s'écoulant au moins partiellement l'un dans l'autre.

10. Procédé de fabrication d'un récipient selon l'une quelconque des revendications 1 à 8, consistant en une première étape de fabrication d'une préforme (1), suivie d'une deuxième étape de fabrication d'un récipient (10) de type bouteille dans un moule (50) qui est prévu pour donner sa forme finale au récipient, par étirage biaxial de ladite préforme (1) et moulage par soufflage de celui-ci, dans lequel ledit moule présente une section de col (51) destinée comme bec verseur (11), une section de paroi adjacente (52) et une autre section de fond adjacente (53) qui est destinée à fournir une surface de support (31) au récipient (10), dans lequel ladite deuxième étape d'étirage et de moulage par soufflage comprend les sous-étapes suivantes:

   - tirer la préforme (1) au moyen d'une tige d'étirage (55) qui est introduite dans le moule par le bec verseur (11), ladite tige d'étirage (55) à tirer étant maintenue ou fixée à l'une de ses extrémités (56) et qui pousse l'extrémité inférieure (2) de la préforme (1), par son autre extrémité (57), contre la section inférieure (53) dudit moule (50), au moyen de son autre extrémité (57) agissant ainsi en tant qu'extrémité active (57);
- dilater la préforme intermédiaire (3) ainsi obtenue par étirage, par soufflage (3) jusqu'à ce qu'elle pousse ou soit pressée contre les parois (59) du moule (50), ledit récipient (10) étant ainsi réalisé,

**caractérisé en ce qu'**un évidement (8) avec un relief remarquable (8) pourvu d'une pointe (9) est conformé dans la section de fond (13) au moyen d'une tige d'étirement (35) munie à son extrémité active (57) d'un évidement (58) coopérant avec la pointe (9) dudit relief (8), se logeant ainsi dans le fond (53) dudit moule (50), de manière à générer un positionnement ou un emplacement approprié de ladite extrémité active (57) de la tige d'étirage (55).

11. Procédé selon la revendication précédente, **caractérisé en ce que** le mouvement vers le bas (F) de la tige (55) est interrompu à faible distance ($\epsilon$) de la pointe (9); en particulier dans lequel l'étape de fabrication de la préforme, plus particulièrement telle que définie dans la revendication 10, consiste en un procédé de moulage par injection comprenant les sous-étapes suivantes:

- injecter d'abord une matière liquide secondaire à une température qui est au moins égale à sa température de fusion, qui devient dure lorsqu'elle touche les surfaces relativement froides (59) dudit moule (50) par rapport à celle-ci et d'un noyau (58) dans la section inférieure de la préforme (1);
- injecter ensuite une matière primaire liquide à une température qui est au moins égale à sa température de fusion, qui s'écoule vers la section de paroi (52) et ladite section de col (51), occupant ainsi sensiblement tout le volume desdites sections de paroi et de col, et deux couches dans la section inférieure (63) de la couche secondaire qui sont en contact avec la matière secondaire déjà introduite, de façon à finalement injecter davantage de matière secondaire dans le volume restant, remplir ainsi ledit volume restant dans la section inférieure, dans lequel une couche intermédiaire (47) est ainsi générée dans la section inférieure (63), ladite matière primaire étant au moins translucide, de préférence même transparent, et/ou non teintée et dans lequel la matière secondaire est colorée, en particulier dans lequel des sections allongées (18) sont rainurées sur ou dans la surface tournée vers l'intérieur du relief d'évidement (8) selon un motif orienté déterminé; plus particulièrement dans lequel lesdites sections allongées (18) sont rainurées sensiblement régulièrement ou selon une direction sensiblement régulière suivant la direction d'écoulement de la matière injectée depuis le pourtour (18) de l'évidement (8) jusqu'à la pointe (9) de celui-ci, avec une variété notable des directions mutuelles desdites sections allongées (18).

12. Dispositif de soufflage d'une préforme (1) en un récipient (10) pour la mise en oeuvre du procédé défini dans l'une des revendications 10 ou 11, pour la fabrication d'un récipient tel que défini dans l'une des revendications 1 à 8, respectivement d'une préforme telle que définie dans la revendication 9; en particulier dans lequel ledit évidement (58) est sensiblement conique; plus particulièrement dans lequel la section inférieure (12) du moule (7) présente un relief notable (8), l'évidement (6) étant adapté à la pointe (9) dudit relief (8) de manière à coopérer avec celui-ci lorsqu'il atteint le fond du moule, dans lequel ledit relief remarquable (8) présente un sommet (9) situé sensiblement sur l'axe central ($\ell$) du moule (7).

13. Utilisation d'un récipient tel que défini dans l'une des revendications 1 à 8, **caractérisée en ce que** ledit récipient est destiné à des fluides, en particulier pour boissons, plus particulièrement translucides ou de préférence transparentes; en particulier dans lequel il est rempli d'un milieu (30) diffusant la lumière, notamment un milieu liquide ayant une capacité de diffusion élevée, en particulier de l'eau; plus particulièrement d'un récipient selon la revendication 8 lorsqu'il dépend de l'une des revendications 5 à 8, dans lequel la coloration (25) limitée au fond est dispersée sur pratiquement tout le récipient (15, 16) lors de son remplissage (30), notamment au niveau libre du milieu, en particulier le niveau (N) du liquide dans le récipient.

14. Utilisation d'un récipient selon la revendication précédente, dans lequel ledit récipient (15, 16) est placé en lumière artificielle, en particulier un rayonnement UV (29), notamment d'un récipient selon l'une des revendications 5 à 8, dans lequel le rayonnement visible est principalement dirigé vers le fond (13) muni dudit relief (8), de préférence avec ses nombreuses facettes diverses (19), chacune ayant sa propre direction, réfléchissant ainsi la lumière incidente dans pratiquement toutes les directions, agissant ainsi comme source de lumière secondaire ayant une grande capacité de dispersion, d'autant plus grande lorsque la variation des directions des facettes (19) est plus grande; plus particulièrement dudit récipient en tant que moyen d'identification, dans lequel son évidement (8) a une forme qui est composée d'un symbole ou logo caractéristique qui est choisi spécifiquement pour ladite identification; encore plus particulièrement en tant que moyen d'appel, dans lequel son évidement (8) présente une forme qui est composée d'un symbole ou logo caractéristique qui est choisi spécifiquement pour ladite

**EP 2 477 899 B1**

identification, pouvant ainsi combiner à la fois des actions d'identification et d'appel.

Fig.1

Fig. 2

Fig.3

Fig.4

Fig. 5

Fig. 6

Fig. 7

Fig 8

Fig 9

Fig 15

Fig. 14

EP 2 477 899 B1

Fig. 13

Fig. 12

Fig. 11

Fig. 10

Fig. 16

Fig. 11  Fig. 12  Fig. 13  Fig. 14  Fig. 15  Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006046223 A1
- DE 19721463 A1
- WO 2008100136 A1
- US 4981736 A
- CA 2593927 A1
- BE 20020082